# EUROPEAN PATENT APPLICATION

(11) **EP 2 708 785 A1**
(43) Date of publication of application: **19.03.2014**
(21) Application number: 13184808.7
(22) Date of filing: 17.09.2013
(51) Int. Cl.: F16K 31/06

(54) **Linear solenoid actuator**

(30) Priority: 17.09.2012 NL 2009473
(71) Applicant: Intell Properties B.V., 6920 BA Duiven (NL)
(72) Inventor: Colenbrander, Bernard Gerardus, 7106 EB Winterswijk (NL)
(74) Representative: Ketelaars, Maarten F.J.M.

(57) **Abstract**

The invention relates a solenoid linear actuator comprising a substantially tubular housing, comprising a first member made of a ferro-magnetic material and a second member made of a non-ferro magnetic material and a solenoid coil arranged around the housing, the coil surrounding at least part of the first member and at least part of the second member. A spring biased movable core body is provided, comprising a ferromagnetic material and substantially coaxially arranged at least partly inside the housing, which movable core body comprises a tapered outer end which protrudes into the housing when applying a current through the solenoid coil. With a suitable form of tapered outer end, substantially linear relation behaviour between the current through the coil and the position of the core is provided. This linear relation is advantageous in electrically controlled systems using a variable control current, such as electric valves or injectors.

## Description

### TECHNICAL FIELD

The present invention relates generally to a linear solenoid actuator, and more specifically to valves, and injectors comprising such a solenoid actuator.

### BACKGROUND

A linear actuator is an actuator that creates motion in a straight line, as contrasted with circular motion of a conventional electric motor. Linear actuators are used in machine tools and industrial machinery, in computer peripherals such as disk drives and printers, in valves and dampers, and in many other places where linear motion is required. Electro-mechanical linear actuators are often equipped with an electric motor. Rotary motion of the motor is converted to linear displacement of the actuator. Alternatively, an electromechanical linear actuator can be manufactured using a solenoid coil in which a ferromagnetic core is movably arranged. This type of actuator is referred to as solenoid linear actuator.

Present solenoid valves, such as solenoid gas valves, often comprise a solenoid linear actuator. A valve is operated by controlling a current through the solenoid coil in order to open and/or close the valve. The valve comprises a valve body which is attached to the ferromagnetic core and moved due to an electromagnetic force created by the coil. If an electrical current is applied, the valves are opened, and due to a resilient means, such as a spring, the valves close in absence of an electrical current. This means that actually the state of the valve can only be open or closed. The positioning of the valve body between the fully open position and fully closed position is hardly electrical controllable because of the non-linear relation between the current through the solenoid coil ad the position of the ferromagnetic core.

### SUMMARY

It is an object of the invention to provide a solenoid linear actuator that is better controllable as compared to the ones known from the state of the art.

According to a first aspect of the invention, there is provided a solenoid linear actuator comprising a substantially tubular housing, comprising a first member made of a ferromagnetic material and a second member made of a non-ferro magnetic material and a solenoid coil arranged around the housing, the coil surrounding at least part of the first member and at least part of the second member. A spring biased movable core body is provided, comprising a ferromagnetic material and substantially coaxially arranged at least partly inside the housing, which movable core body comprises a tapered outer end which protrudes into the housing when applying a current through the solenoid coil.

This actuator can be electrically controlled in a gradually manner, as compared to the two way solenoid actuators being open or closed. With a suitable form of tapered outer end, a substantially linear relation behaviour between the current through the coil and the position of the core is possible. This linear relation is advantageous in electrically controlled systems using a variable control current, such as electric valves or injectors.

In an embodiment, the tapered outer end has a conical shape. A conical shape showed good results and is relatively easy to manufacture.

In an embodiment, the conical shaped outer end tapers under an angle of 10 - 60 degrees.

In an embodiment, the non-ferro material is brass. Other non-ferro metals are possible, such as non-ferro stainless steel. Alternatively, non-metals, such as plastic, are suitable.

According to a second aspect, a solenoid valve is provided comprising a channel having an inlet for letting in a fluid, and an outlet (3') for letting out the fluid, a closing member arranged to close the channel; and a solenoid actuator according to the first aspect or embodiments thereof wherein the closing member is coupled to the movable core body.

According to a third aspect an injector is provided comprising a solenoid valve as described above, and comprising a nozzle at the outlet, wherein the closing member is a needle arranged to open and close the nozzle, wherein the needle is coupled to the movable core body.

In a fourth aspect, an injector is provided comprising a solenoid valve as described above, wherein the needle is adjustably coupled to the movable core body. In such an injector the position of the needle end relative to the valve body can be adjusted to advantageously fine tune the nozzle.

According to a fifth aspect, a flapper-nozzle system is provided, comprising a nozzle having an inlet, a nozzle opening and an output; a flapper variably arranged at a distance from the opening and a solenoid actuator as described above, wherein the flapper is coupled to the movable core body, so as to vary the distance depending on a current through the solenoid coil.

### BRIEF DESCRIPTION OF THE DRAWINGS

- FIG. 1:: schematically shows an exemplary embodiment of a linear solenoid actuator;
- FIG. 2:: illustrates an exemplary embodiment of flapper-nozzle system using the principles of the linear solenoid actuator of Figure 1;
- FIG. 3:: illustrates an exemplary embodiment of an injector shown in a cut-out view;
- FIG. 4:: is a cross section of the embodiment of Figure 3 in a closed state;
- FIG. 5:: is a cross section of the embodiment of Figure 3 in an open state;
- FIG. 6:: shows a graph of the gas flow as a function of current for an injector according to the embodiment of Figure 3;
- FIG. 7:: is a cross section of a further embodiment of a valve in an open state;
- FIG. 8A - 8C:: show three possible configurations of the tapered outer end of the movable valve body; and
- FIG 9:: shows two relations between control voltage and movement of movable control bodies with different shapes of the outer ends.

### DETAILED DESCRIPTION

The present invention will now be described with reference to the figures, in which like reference labels are used to refer to like elements throughout.

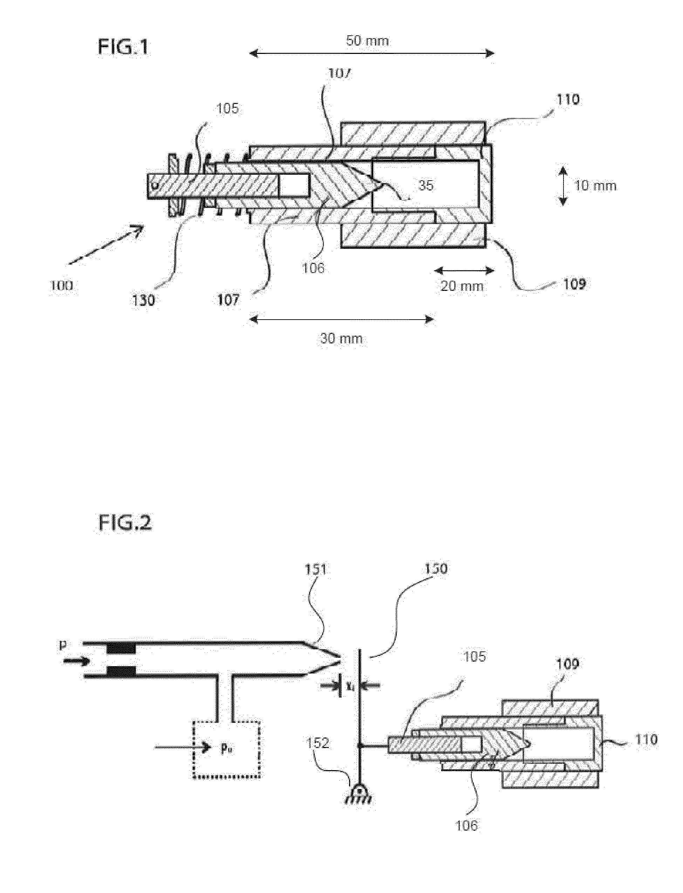

Figure 1 schematically shows an exemplary embodiment of a linear solenoid actuator 100. The solenoid linear actuator 100 comprises a substantially tubular housing, comprising a first member 110 made of a ferro-magnetic material and a second member 107 made of a non-ferro magnetic material. The housing may be cylindrical but other shapes are possible. The housing may be closed at the side of part 110, but alternatively it may be open at both sides. A solenoid coil 109 is arranged around the housing, wherein the coil 109 surrounds at least part of the first member 110 and at least part of the second member 107. A spring biased movable core body 106 is substantially coaxially arranged at least partly inside the housing. The core body 106 and the first member 110 of the housing comprise a ferromagnetic material, such as steel. The non-ferro second member 107 may e.g. be made from brass. The movable core body 106 comprises a tapered outer end 35 which protrudes into the housing when applying a current through the solenoid coil 109. In the embodiment of Figure 1, the movable core body 106 comprises a cavity in which an extension 105 is mounted. Preferably the position of the extension 105 relative to the movable core body 106 is adjustable, to fine tune the device as will become clearer when discussing the embodiments below. In Figure 1 typical dimensions of the actuator components are indicated, other dimensions are possible.

By a suitable tapering of the outer end 35, the actuator 100 can be electrically controlled in a gradually manner, as compared to the known two way solenoid actuators. Substantially linear relation behaviour between the current through the coil and the position of the movable core body is achieved, which is advantageous in many applications. The advantages will be clear from the embodiments described below. Please note that although the present actuators also are referred to as 'linear actuators', they do not show a linear relation (i.e. function) between the current and the position of the movable core. The known linear actuators got their name from the fact that the movable core is move in a linear way.

Figure 2 illustrates an exemplary embodiment of a flapper-nozzle system using the principles of the linear solenoid actuator of Figure 1. The flapper nozzle system is a pneumatic device arranged to convert a displacement (xᵢ) in a pressure signal Po. The flapper nozzle system comprises a flapper 150 and a nozzle 151. The flapper 150 is pivotable arranged at a pivot 152. The flapper 150 is attached to the movable core body 106. In Figure 2 the air supply P is input for the nozzle 151 and Po is the output pressure. When the distance xᵢ decreases, the output pressure Po will increase. In a certain range the displacement xᵢ en Po are inversely proportional. The linear solenoid actuator is very suitable to vary this displacement. The combination of a flapper nozzle and this linear actuator results in a device in which the output pressure Po is inversely proportional with the electric current of the solenoid 109. This combination forms an electric current-pressure converter or I-P converter.

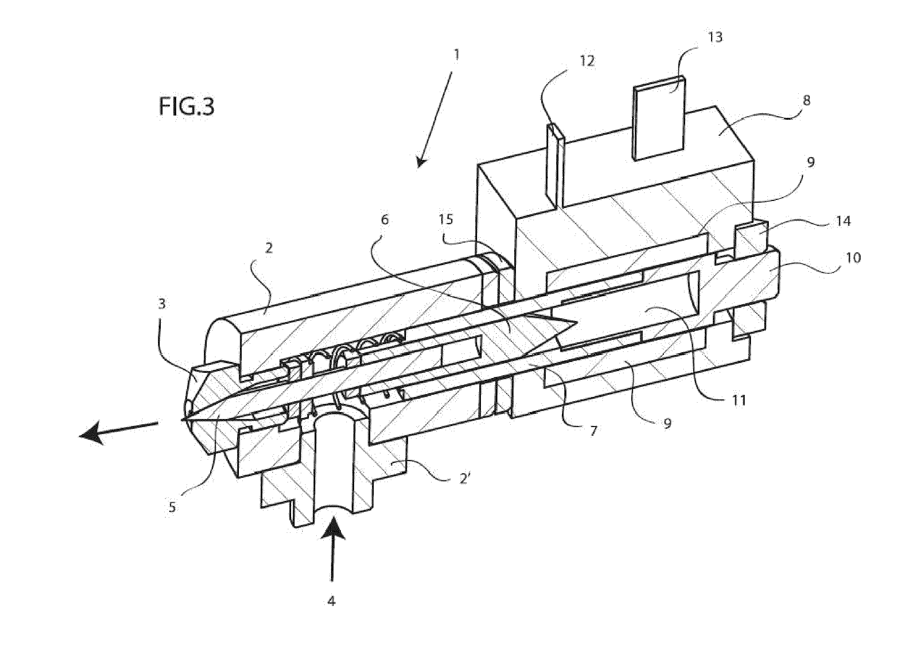

Figure 3 illustrates an exemplary embodiment of an injector shown in a cut-out view using the principles of the linear solenoid actuator of Figure 1. The magnetic injector 1 consists of a brass body 2 with a nozzle 3, and at the bottom side of the body 2 an inlet piece 2' is arranged with an inflow opening 4 for the gas. A needle 5 is movably arranged in channel of the brass body 2. By means of moving the needle 5, the through-flow opening of the nozzle 3 can be varied. The needle 5 is attached to a steel pin 6. The steel pin 6 is movably arranged inside a brass cylinder 7. The magnetic injector 1 further comprises a housing 8 containing a solenoid coil 9. Partly surrounded by the solenoid coil 9 lies a steel cap 10 arranged in the housing 8. The steel cap 10 is fixed to the brass cylinder 7 and comprises a cavity 11 in which an outer end of the pin 6 can protrude.

Figure 3 also shows two contacts 12 and 13 for connection with a power supply, not shown. In this embodiment, the cap 10 is mounted into the housing 8 by means of a nut 14. Between the housing 8 and the brass body 2, one or more sealing rings 15 are arranged.

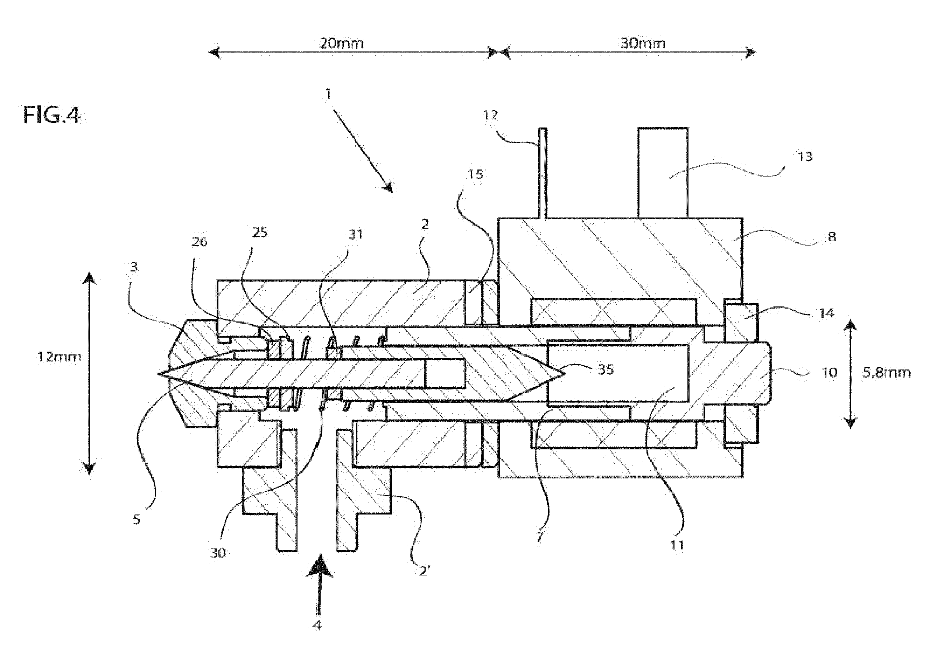

Figure 4 is a cross sectional view of the embodiment shown in Figure 3. The steel cap 10 is fixed to the brass cylinder 7 by means of a threaded connection (not shown). The brass cylinder 7 is fixed to the brass body 2 by means of a threaded connection (not shown). The steel cap 10 has a threaded connection (not shown) with the nut 14. The nozzle 3 is fixed to the brass body 2 by means of a threaded connection (not shown). The needle 5 is fixed to the steel pin 6 by means of a threaded connection (not shown). Around the needle 5 a closing ring 25 is arranged together with a sealing ring 26. A spring 30 is arranged around the needle 5 and inside the channel of the brass body 2. At one side (i.e. the right side at Figure 4) the spring 30 abuts against an outer end of the brass cylinder 7. At the other side (i.e. the left side in Figure 4) the spring 30 abuts against the closing ring 25. To fixate the needle 5 in the steel pin 6, a locknut 31 is used which is arranged around a threaded part of the needle 5. In the example of Figure 3 and 4, the steel pin 6 comprises a cone shaped outer end piece 35, but it should be noted that the end piece 35 can be tapered differently, and that the invention is not limited to this conical shape.

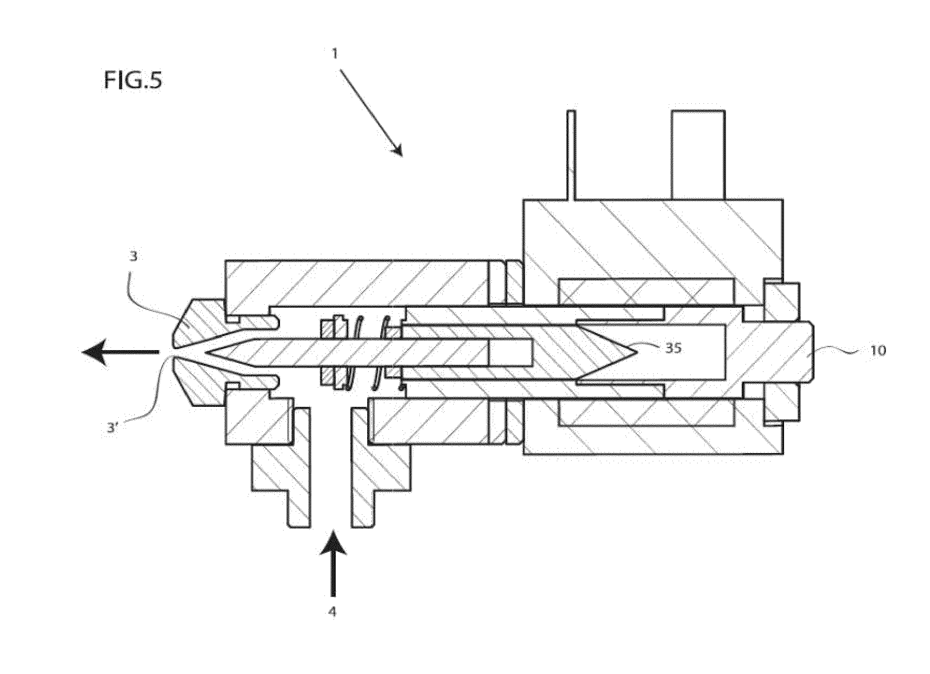

The injector 1 is biased closed by the spring 30, see Figure 4. Once the solenoid coil 9 is energized with a direct current, an axial magnetic field is created inside and around the coil 9. Depending of the direction of the current, the tip of the cone 35 of the steel pin 6 will then become e.g. an N-pole and an outer end at the entrance 36 of the steel cap 10 will become an S-pool. Due to the attraction between the N-pole and the S-pole, the steel pin 6 will be pulled into the cavity 11 (i.e. to the right in Figure 4). Figure 5 shows the embodiment of Figure 3 and 4 in an opened state.

By using a non-ferro metal, such as brass, the cylinder 7 will not form any obstacle for the magnetic field created by the solenoid coil 9. The steel pin 6 will thus be magnetised by the magnetic field. Instead of non-ferro metals, also non-metals, such as plastics could be used to fabricate the cylinder 7.

In some prior art magnetic valve systems, a straight cylindrical pin is used to be attracted towards the steel cap. A current is applied to the coil to create a magnetic force inside the coil as to pull the pin into the steel cap. As the straight pin is pulled further to the right, the magnetic force (because of the shape of the magnetic field inside the steel cap) increases. The spring 30 will create a proportional force in the opposite direction. Since the magnetic force increases more than proportionally, the magnetic force will prevail. This means that in prior art systems the pin is not controllable and will abut against an end piece of the steel cap or against any other suitable stop. Only the completely opened or completely closed state can be controlled, and no intermediate position. The pin according to an embodiment comprises a tapered part 35 that enters the cavity 11. In this example, the pin 6 had a conical end piece 35. When entering the cavity 11, the attracting magnetic forces between the pin 6 and the steel cap 10 will be orientated more and more perpendicular to the inner surface of the steel cap 10. The total resulting axial attractive force as a function of displacement will increase less as compared to a pin in the state of the art solenoid valves.

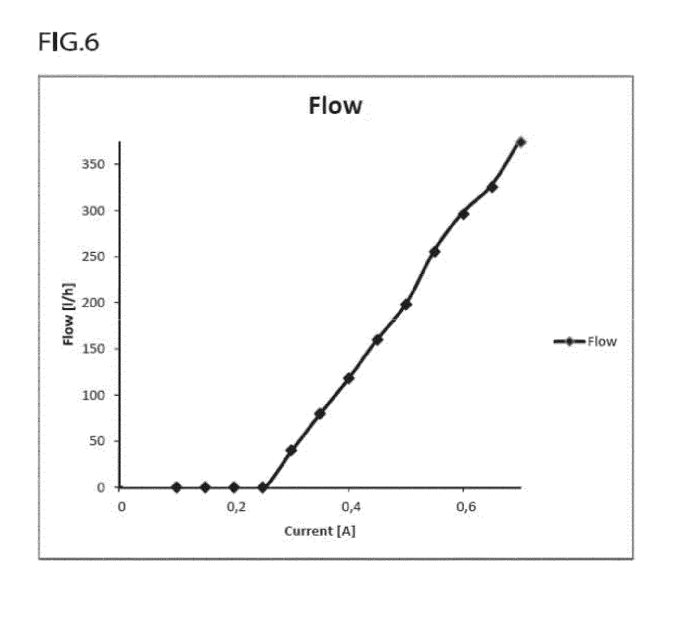

Figure 5 shows the completely open situation of the injector 1. Gas is injected through the outlet 3'. In case of a gas burner, the gas will be mixed with air and ignited to produce a flame. Please note that in the completely opened state of the injector 1, see Figure 5, the steel pin 6 does not have to be stopped by any physical stop. It is stopped because at a certain control current, the spring force and the counteracting magnetic force are equal. Due to a suitable design of the end of the steel pin 6, the force of the spring 30 can be counteracted by a magnetic force between the steel pin 6 and the cap 10, so that the function of the displacement and the electric current is linear. As a result a flow through the injector 1 will be approximately linear to the applied current through the solenoid coil 9. An example of a measurement of a gas injector is shown in Figure 6. As can be seen from Figure 6, the gas flow gradually increases with the applied current in a linear way.

If the power fails, the needle 5 and thus the closing ring 25 and the sealing ring 26 are pushed to the left by the spring 30. As a result, the rubber ring 26 will seal off the opening to the nozzle 3 to stop the gas flow. It should be noted that the closing ring 25 and the sealing ring 26 can be left out from the injector 1. In that case the injector 1 is closed by the needle 5 abutting the inner wall of the nozzle 3. An advantage of the embodiment with the closing ring 25 and the sealing ring 26 is that in such an embodiment, the injector 1 can be closed more secure, minimizing the risk of leakage. Furthermore, there will be no or little damage of the needle and nozzle which increases life time.

An additional advantage of the variable injector described above is that the nozzle opening during closing is gradually decreasing (i.e. getting smaller). Thus at a low setting the gas flow intensity is greater than in the usual situation of a known fixed nozzle controlled by a gas valve. This larger outflow intensity provides a better gas-air mixing at low settings. This is really advantageous for a gas burner.

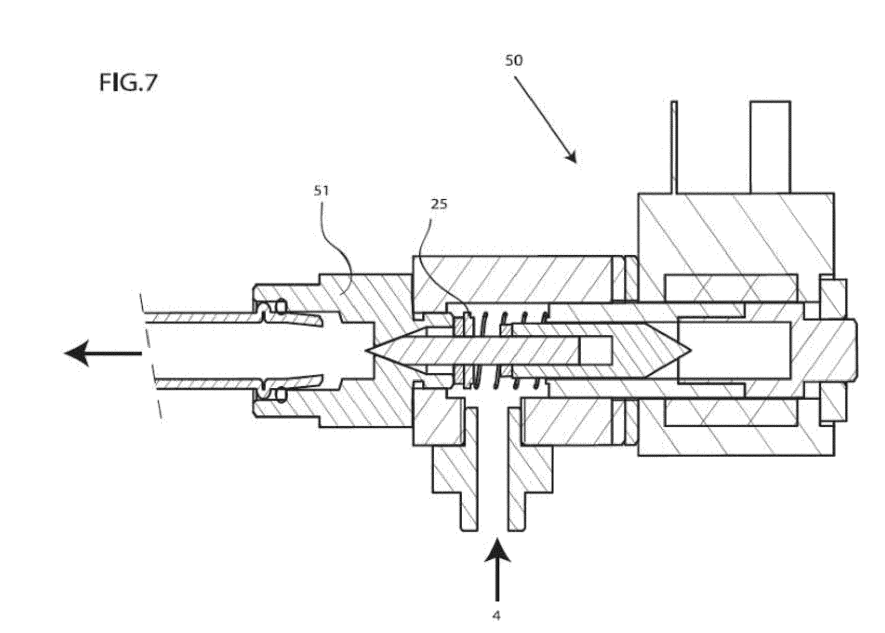

Figure 7 shows a further embodiment of a valve 50. In this case the valve does not have a nozzle as in the embodiments described with reference to Figure 3 and 5. The embodiment of Figure 7 relates to a valve arranged to open and close an opening, see the opening 51. The elements shown in Figure 7 resemble the parts of the injector 1 shown in Figure 4. As is described with reference to Figure 2, the gas flow will have a substantially linear relation with the electrical current through the coil. So in this way, the valve is easier to control as compared to the state of the art solenoid valves.

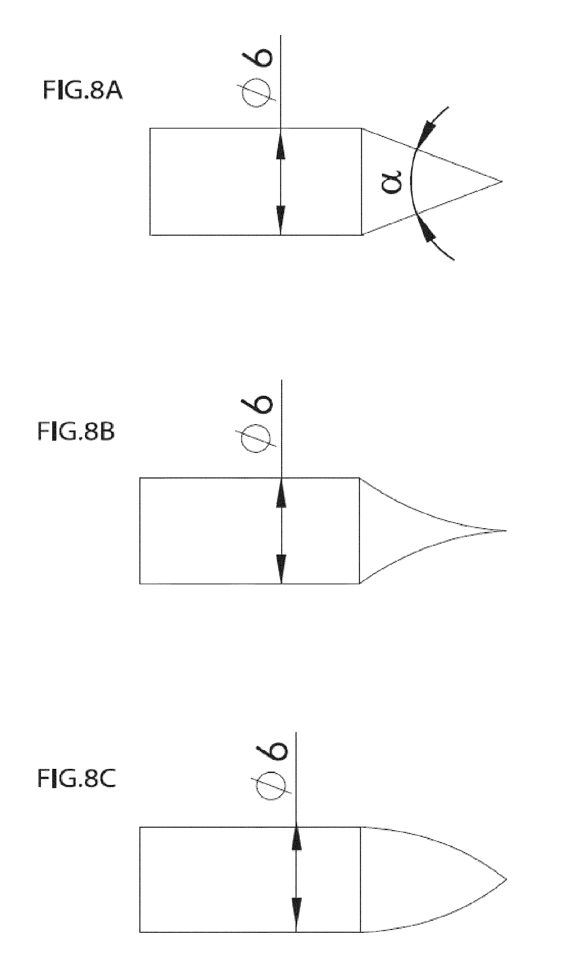

Figures 8A, 8B and 8C show some possible non-limiting configurations of the tapered outer end 35 of the movable valve body 6, in order to improve the linearity of the valve. In the examples of Figures 8A-8C the diameter indicated is 6 mm. The angle α shown in Figure 8A is 45°. Preferably the angle α lies in the range of 10° - 60°, the exact value being depend on the configuration of the actuator. More in particular, the value of the angle α is chosen in the range of 25° - 60°. Another preferred value of the angle α is 44°, with a further preferred range for the angle α being between 40° and 50°.

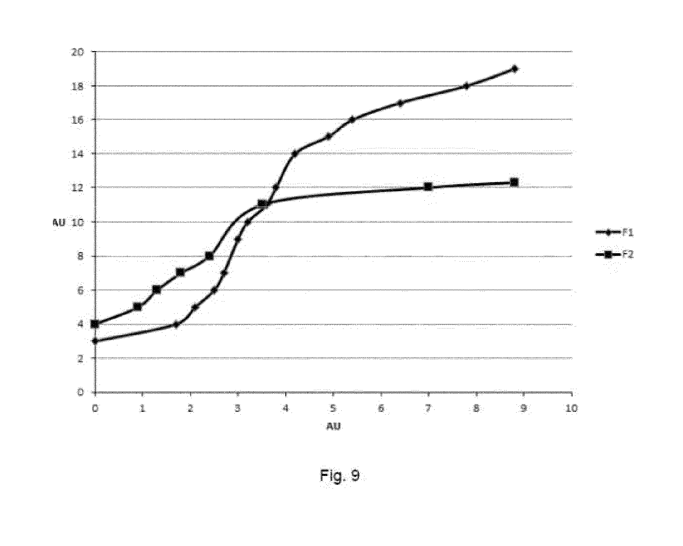

Figure 9 shows displacement of the movable core body 106 as a function of voltage applied to the solenoid coil 9. The line with the squares - F2 - indicates displacement of the movable core body 106 where the outer end 35 has a value of the angle α at substantially 180°. Hence, the line with squares relates to a movable core body 106 having which provides a blunt outer end 35. The line with the diamonds - F1 - indicates displacement of the movable core body 106 where the outer end 35 has a sharp shape, with a value of the angle α that is substantially less than 90° and preferably less than 60°, down to 20°. In this particular embodiment, the angle α has a value of 21.5°.

From Figure 9 can be seen that the controllable displacement of the movable core body 106 having a sharp outer end 35 is twice as large as a movable core body having a blunt outer end 35, over the same range of the control voltage. Also the curve F2 saturates at an earlier stage than curve F1. Hence, linearity of control of the movable core body 106 where the outer end 35 has a sharp shape is better. This means a movable core body 106 where the outer end 35 increases precision of control and/or improved freedom of design of equipment in which this aspect is embodied.

Although the invention has been shown and described with respect to certain preferred embodiments, it is obvious that equivalents and modifications will occur to others skilled in the art upon the reading and understanding of the specification. Instead of gas, the controlled fluid may be another fluid, such as gas fuel, water or even paint. The present invention includes all such equivalents and modifications, and is limited only by the scope of the following claims.

## Claims

1. A solenoid linear actuator (100) comprising:
- a substantially tubular housing, comprising a first member (110) made of a ferro-magnetic material and a second member (107) made of a non-ferro magnetic material;
- a solenoid coil (109) arranged around said housing, said coil (109) surrounding at least part of said first member (110) and at least part of said second member (107);
- a spring biased movable core body (106) comprising a ferromagnetic material and substantially coaxially arranged at least partly inside said housing (107,110),
wherein said movable core body (106) comprises a tapered outer end (35) which protrudes into said housing (107,110) when applying a current through said solenoid coil (109).

2. The solenoid linear actuator according to claim 1, wherein said tapered outer end (35) has a conical shape.

3. The solenoid linear actuator according to claim 1 or 2, wherein said tapered shaped outer end (35) tapers under an angle of 25 - 60 degrees.

4. The solenoid linear actuator according to claim 3, wherein said tapered shaped outer end (35) tapers under an angle of 40 - 50 degrees.

5. A solenoid linear actuator according to claim 4, wherein said tapered shaped outer end (35) tapers under an angle of 44 degrees.

6. A solenoid linear actuator according to any of the preceding claims, wherein said non-ferro material is brass.

7. A solenoid valve (1; 50) comprising:
- a channel having an inlet (4) for letting in a fluid, and an outlet (3') for letting out said fluid;
- a closing member (5; 25) arranged to close said channel;
- a solenoid actuator according to any of the preceding claims wherein said closing member (25) is coupled to said movable core body (106).

8. An injector (1) comprising a solenoid valve according to claim 7, and comprising a nozzle (3) at said outlet and wherein said closing member is a needle (5) arranged to open and close said nozzle, wherein said needle is coupled to said movable core body.

9. An injector comprising a solenoid valve according to claim 8, wherein said needle is adjustably coupled to said movable core body.

10. A flapper-nozzle system (150,151,100), comprising:
- a nozzle (151) having an inlet, a nozzle opening and an output;
- a flapper (150) variably arranged at a distance (xᵢ) from said opening;
- a solenoid actuator according to any of the claims 1 to 6, wherein said flapper (150) is coupled to said movable core body (106), so as to vary said distance (xᵢ) depending on a current through said solenoid coil (109).
